## Europäisches Patentamt

## European Patent Office

## Office européen des brevets

(11) Veröffentlichungsnummer: **0 306 540 B1**

(12) **EUROPÄISCHE PATENTSCHRIFT**

(45) Veröffentlichungstag der Patentschrift: **22.02.95**

(51) Int. Cl.⁶: **A62D 3/00**

(21) Anmeldenummer: **87107552.9**

(22) Anmeldetag: **23.05.87**

(54) Verfahren und Anlage zur Energiegewinnung aus giftigen Abfallstoffen bei deren gleichzeitiger Entsorgung.

(30) Priorität: **27.11.86 DE 3640573**

(43) Veröffentlichungstag der Anmeldung:
**15.03.89 Patentblatt 89/11**

(45) Bekanntmachung des Hinweises auf die
Patenterteilung:
**22.02.95 Patentblatt 95/08**

(84) Benannte Vertragsstaaten:
**AT CH DE FR GB LI NL SE**

(56) Entgegenhaltungen:
**WO-A-86/02847        DE-A- 3 313 889**
**DE-A- 3 640 573      DE-B- 2 311 213**
**US-A- 4 435 379      US-A- 4 587 116**

(73) Patentinhaber: **Suppan, Friedrich, Dipl.-Chem.**
**Buchenweg 12**
**D-53894 Mechernich (DE)**

(72) Erfinder: **Suppan, Friedrich, Dipl.-Chem.**
**Buchenweg 12**
**D-53894 Mechernich (DE)**

(74) Vertreter: **von Kreisler, Alek, Dipl.-Chem. et al**
**Patentanwälte**
**von Kreisler-Selting-Werner**
**Postfach 10 22 41**
**D-50462 Köln (DE)**

Rank Xerox (UK) Business Services
(3.10/3.09/3.3.3)

## Beschreibung

Die Erfindung betrifft Verfahren zur Energiegewinnung aus giftigen Abfallstoffen bei deren gleichzeitiger Entsorgung, wobei die Abfallstoffe zumindest erhebliche Anteile von substituierten Kohlenwasserstoffen aufweisen, wie sie beispielsweise als Chlorverbindungen bzw. Chlorkohlenwasserstoffe der Formeln $CCl_4$, $CHCl_3$, $C_2H_2Cl_4$, PCB, PVC, Polyvinylidenchlorid etc. vorliegen sowie zur Durchführung des Verfahrens geeignete Anlagen.

Substituierte, insbesondere halogenierte Kohlenwasserstoffe, wie sie beispielsweise im Tetrachlorkohlenstoff, Chloroform, Methylenchlorid, Tetra- und Trichloräthylen, Tetrachloräthan, PCB etc. aber auch im PVC oder Polyvinylidenchlorid vorliegen, sind insbesondere dann, wenn sie ihren Zweck erfüllt haben, ein mehr oder weniger problematischer Gift- oder Sondermüll, dessen man sich auf die verschiedenartigste Weise zu entledigen trachtet. Die Beseitigung erfolgt entweder durch Deponierung oder durch Verbrennung auf hoher See oder auch auf dem Lande in Hochtemperaturöfen mit einem Überschuß an Luft unter Energiezufuhr.

Der Energiebedarf ist in vielen Fällen nicht unerheblich, da nicht nur die zu beseitigenden Stoffe verdampft und auf die erforderliche Zersetzungstemperatur erhitzt, sondern auch enorme Luftmengen aufgeheizt werden müssen. Dabei wird entweder, wie bei der Verbrennung auf hoher See, eine Verschmutzung der Atmosphäre und die Gefahr sauren Regens in Kauf genommen oder es werden äußerst kostspielige Anlagen zur Luftreinhaltung erforderlich.

Aus der DE-A-33 13 889 sind ein Verfahren oder eine Vorrichtung zur Beseitigung von Gift und Sondermüll bekannt, bei welchem die giftigen Abfallstoffe mit einem elektrisch leitenden Stoff, insbesondere in Gestalt von Eisenpulver und/oder Koks vermischt in einem Induktionsofen auf die Zersetzungstemperatur des zu beseitigenden Giftes und/oder Sondermülls gebracht wird. Hieraus ist nicht zu entnehmen, daß auch die Oxyde schwer verhüttbarer Metalle bei Temperaturen zwischen 800 und 1.100°C zum Einsatz gebracht werden können, wenn gleichzeitig Wasserdampf zugegen ist.

Die US-A-4,435,379 beschreibt ein Verfahren zur Zersetzung von chlorierten Kohlenwasserstoffen mit Metalloxyden mit dem Ziel, alle Kohlenstoffatome in Kohlenoxyd zu überführen. Dabei kommt es darauf an, elementares Chlor bereitzustellen zur Umwandlung von Wasserstoffgruppen in HCl. Dabei muß das gesamte Verhältnis von Chlor zu Wasserstoffgruppen mindestens 1:1 betragen, um Metallchlorid herstellen zu können.

Die US-A-4,587,116 beschreibt ein ähnliches Verfahren, bei dem auch stickstoffhaltige Abfallstoffe entsorgt werden können. Die Erhitzung erfolgt ebenfalls von außen und nicht von innen heraus.

Die vorliegende Erfindung geht von der Aufgabe aus, mit einfachen Mitteln, Sonder- und Giftmüll, der substituierte, insbesondere halogenierte Kohlenwasserstoffe enthält, ohne Beeinflussung der Umwelt so umzuwandeln, daß industriell verwertbare Stoffe, z.B. Chlor und Brennstoffe entstehen.

Zur Lösung dieser Aufgabe wird bei einem Verfahren zur Energiegewinnung aus substituierten Kohlenwasserstoffen, wie sie z.B. als $CCl_4$, $CHCl_3$, $C_2H_2Cl_4$, PCB, PVC, Polyvinylidenchlorid etc. in reiner oder gebundener Form vorliegen, mit der Erfindung vorgeschlagen, daß der Abfallstoff in einem induktiv beheizbaren Reaktor in Anwesenheit eines schwer verhüttbaren Metalloxides und eines elektrisch leitfähigen Materials, beispielsweise Elektrodenkoks oder Elektrographit sowie im Kontakt mit Wasserdampf bei Temperaturen zwischen 800 und 1.100°C thermisch zersetzt wird, wobei eine dem Chlorgehalt der Abfallstoffe entsprechende Metalloxidmenge in flüchtiges Metallchlorid sowie ein Anteil freiwerdenden Kohlenstoffs in Kohlenmonoxid und ein mit dem Metalloxid nicht reagierender Anteil des Kohlenstoffs mit Hilfe einer stöchiometrischen Menge Wasserdampf zu Wassergas, $CO + H_2$, umgesetzt wird. Zu diesem Zweck werden die zu entsorgenden substituierten Kohlenwasserstoffe in festem, beispielsweise pulverisiertem flüssigem oder gasförmigem Aggregatzustand in einen Induktionsofen eingetragen, der ein Gemisch aus Kohlenstoff, beispielsweise Koks, und schwer verhüttbarem Metalloxid, beispielsweise $Al_2O_3$, enthält und zusätzlich mit Wasserdampf beaufschlagt wird.

Anstelle oder zusätzlich zum beispielhaft angegebenen Metalloxid $Al_2O_3$ können auch andere Metalloxide und/oder Metalloxide bzw. Metallhydroxide enthaltende Stoffe wie Filterstäube, Flugaschen, Flugsande, Haldenberge, Galvanikschlämme und dergleichen zur Durchführung des Verfahrens zumindest anteilig verwendet werden.

Durch die erfindungsgemäße Lösung, wobei die zu entsorgenden substituierten Kohlenwasserstoffe unter Erhitzung im Kontakt mit Metalloxid sowie elektrisch leitfähigem Material und einer stöchiometrisch dosierten Menge Wasserdampf umgesetzt werden, wird erreicht, daß ausschließlich solche Umwandlungsprodukte bzw. Gase entstehen, die im weiteren Verlauf des Prozesses als chemisch weiterverwertbare Grundstoffe zur Herstellung von Folgeprodukten mit Vorteil verwendbar sind.

So wird beispielsweise aus dem in den substituierten Kohlenwasserstoffen enthaltenden Kohlenstoff gasförmiges Kohlenmonoxid freigesetzt, der Wasserstoff entweicht diesem zusammen als Wasserstoffgas und Chlor verbindet sich mit Metalloxid zu Metallchlorid, das bei der Umwandlungstemperatur im Reaktor flüchtig ist und vom übrigen Gas nach Abkühlung an geeigneter Stelle in einer Kondensationsstufe als Sublimat oder Kondensat ausgeschieden wird.

Ein weiterer Vorteil ergibt sich daraus, daß für bisher mit wirtschaftlichen Mitteln für nicht verhüttbar angesehene und daher mit Kosten zu entsorgende, Metalloxide enthaltende umweltgefährdende Stoffe nunmehr mit der Erfindung eine wirtschaftlich nutzbringende Anwendung aufgezeigt wird.

Da bei den substituierten Kohlenwasserstoffen das Kohlenstoff-Wasserstoff-Verhältnis zugunsten des Kohlenstoffs verschoben ist, entstehen Wassergasgemische mit einem Unterschuß an Wasserstoff und einem Überschuß an CO. Durch Zugabe von definierten Mengen an Wasserdampf wird erreicht, daß entweder ein Wassergas mit ungefähr gleichen Anteilen an CO und $H_2$ oder einem CO-Volumenanteil entsteht, der doppelt so groß ist wie das Wasserstoffvolumen. Durch diese Maßnahme kann das entstandene Gasgemisch, das nach Abgabe seiner Wärmeenergie in einem Gasometer gesammelt wird, in der nachgeschalteten Fischer-Tropsch-Synthese nach einer der Idealgleichungen reagieren und ein Optimum an flüssigen Kohlenwasserstoffen liefern.

Die ebenfalls flüchtigen Chloride, beispielsweise $AlCl_3$, $TiCl_4$ etc. sublimieren an den dafür vorgesehenen Stellen und werden nach Umsetzung mit Sauerstoff bzw. durch einen nachgeschalteten, modifizierten Deacon-Prozeß wieder in die Metalloxide überführt und erneut in den Verfahrensgang eingeschleust. Dadurch ist es möglich, mit einer vergleichsweise geringen im Kreislauf geführten Menge Metalloxid vergleichsweise sehr große Mengen von substituierten Kohlenwasserstoffen zu entsorgen bzw. zu chemisch weiterverwertbaren Grundstoffen umzusetzen.

Das bei der Umsetzung der Chloride mit Sauerstoff entstandene Chlor kann industriell verwertet werden. So kann beispielsweise Rotschlamm, ein Abfallprodukt der Aluminiumindustrie, das bis heute kaum genutzt werden kann, in leicht trennbare Metallchloride überführt werden, die entweder als solche oder nach Umwandlung in die Oxide in verschiedenen Wirtschaftszweigen Verwendung finden können.

Bei der Bildung nutzbarer Kohlenwasserstoffe durch die nachgeschaltete Fischer-Tropsch-Synthese wird, da es sich um exotherme Reaktionen handelt, eine erhebliche Wärmemenge frei, die mit Hilfe von Kühlwasser abgeführt werden muß. Dadurch erhält man Wasserdampf, mit dessen Hilfe Turbinen, Dampfmotore etc. angetrieben werden können.

Ausführungsbeispiel A

Als erstes Ausführungsbeispiel der Erfindung sei die Energieerzeugung aus Tetrachlorkohlenstoff anhand der zugehörigen Reaktionsgleichungen und Reaktionsenthalpien dargestellt:

1.     $3\ CCl_4\ +\ 2\ Al_2O_3\ +\ 9\ C\ +\ 6\ H_2O\ \rightarrow\ 4\ AlCl_3\ +\ 12\ CO\ +\ 6\ H_2$

Aus den Bildungsenthalpien der einzelnen Reaktanden ergibt sich in erster Näherung die Reaktionsenthalpie:

2.     $\Delta H\ =\ (4x\text{-}705,5\ +\ 12x\text{-}110,5)\text{-}(3x\text{-}106,7 + 2x\text{-}1675 + 6x\text{-}236)$
$\Delta H\ =\ +\ 938,1\ kJ/Formelumsatz$

Das bedeutet, daß für die Vernichtung von einer Tonne Tetrachlorkohlenstoff zunächst einmal 564 kWh und ca. 234 kg Kohlenstoff aufgewandt werden müssen. Verbrennt man das entstandene Gasgemisch von CO und $H_2$ in einem Gasmotor bei einem thermischen Wirkungsgrad von 34% und stellt elektrische Energie her, so erhält man ca. 983 kWh und eine Wärmeenergie von etwa 6.850.000 kJ. Benutzt man das entstandene Wassergas, - ein Gemisch von CO und $H_2$, wird als Wassergas bezeichnet -, zur Herstellung von brennbaren Kohlenwasserstoffen, Methan, Propan, Butan, etc. sowie den weiteren Homologen, die als Benzin, Dieselöl usw. technisch genutzt werden, in der Fischer-Tropsch-Synthese, so erhält man nach der Reaktionsgleichung

3.     $12\ CO\ +\ 6\ H_2\ \rightarrow\ 6\ (\ \text{-}CH_2\text{-}\ )\ +\ 6\ CO_2$

pro Tonne $CCl_4$ ca. 180 kg nutzbare Kohlenwasserstoffe, von denen etwa 53% als Benzin verwendet werden können, während 34% als Gase und der Rest als Dieselöl und Paraffine anfallen.

Die gleichzeitig auftretende Wärmeenergie von etwa 2.600.000 kJ muß durch Kühlwasser abgeführt werden und liefert einen Wasserdampf mit einem Druck von ungefähr 45 - 48 bar. Mit Hilfe eines Dampfmotors kann daraus bei einem Wirkungsgrad von 25% elektrische Energie von ca. 180 kWh erzeugt werden. Setzt man die gasförmigen Kohlenwasserstoffe, die der Einfachheit halber als Methan berechnet werden sollen, ebenfalls für die Erzeugung von elektrischer Energie ein, so können weitere 320 kWh und eine Wärmemenge von 2.200.000 kJ erzeugt werden.

Selbst bei Einsatz des als besonders ungünstig einzustufenden Tetrachlorkohlenstoffs ist, wie ersichtlich, das beschriebene Verfahren imstande, zumindest für sich selbst die erforderliche Energie zu liefern.

Ausführungsbeispiel B

Wesentlich günstiger gestaltet sich die Stoff- und Energiebilanz in dem als Fischer-Tropsch-Synthese bezeichneten Verfahrensschritt bei der Beseitigung von polychlorierten Biphenylen mit beispielsweise der Summenformel $C_{12}H_6Cl_4$.

Geht man von der Reaktionsgleichung

4.  $3\ C_{12}H_6Cl_4\ +\ 2\ Al_2O_3\ +\ 30\ H_2O\ \rightarrow\ 4\ AlCl_3\ +\ 36\ CO\ +\ 39\ H_2$

für die Zersetzungsreaktion aus, so erhält man durch die Fischer-Tropsch-Synthese, die nach der Gleichung

5.  $36\ CO\ +\ 39\ H_2\ \rightarrow\ 24\ (-CH_2-)\ +\ 12\ CO_2\ +\ 12\ H_2O\ +\ 3\ H_2$

verläuft, pro Tonne des genannten PCP etwa 380 kg Kohlenwasserstoffe, wovon etwa 200 kg als Benzin gebraucht werden können und ca. 130 kg gasförmig sind. Duch Verbrennen der Gase und Nutzung des anfallenden Dampfes kann die für die Zersetzungsreaktion erforderliche Energie ohne Schwierigkeiten aufgebracht werden.

Ein weiterer Vorteil ist hierbei, daß kein zusätzlicher Kohlenstoff erforderlich ist.

Die Zersetzung des Metallchlorids, das durch Sublimation aus dem Wassergas abgeschieden wird, kann nach der Reaktionsgleichung

6.  $2\ AlCl_3\ +\ 3\ H_2O\ \rightarrow\ Al_2O_3\ +\ 6\ HCl$

erfolgen.

Der gasförmige Chlorwasserstoff wird nach einem modifizierten Deacon-Verfahren, im Prinzip aber nach der Reaktionsgleichung

7.  $4\ HCl\ +\ O_2\ \rightarrow\ 2\ Cl_2\ +\ 2\ H_2O$

in elementares Chlor umgewandelt, das komprimiert und für industrielle Zwecke eingesetzt werden kann.

Der Verfahrensgang ist sehr wirtschaftlich, insbesondere deshalb, weil zu seiner Durchführung eine vergleichsweise vereinfachte Anlage ausreichend ist.

Das Verfahren sieht vor, daß die Zersetzung der Abfallstoffe und deren Umsetzung bei Temperaturen zwischen 800 und 1.100°C vollzogen wird.

Hierbei wird der Reaktor und/oder das elektrisch leitfähige Material induktiv beheizt.

Die induktive Beheizung eines Gemenges, welches in homogener Verteilung elektrisch leitfähige Partikel aufweist, hat den Vorteil, daß damit in der gesamten Masse des Gutes von innen heraus Wärme erzeugt wird, wodurch eine intensive thermische Zersetzung vollzogen wird.

Eine Ausgestaltung des Verfahrens sieht mit Vorteil vor, daß als Metalloxid Rotschlamm verwendet wird.

Bekanntlich ist Rotschlamm ein wirtschaftlich nicht verhüttbares Abfallprodukt, dessen Entsorgung bisher teilweise mit nicht unerheblicher Aufwendung von Kosten vorgenommen werden mußte. Wie bereits vorgängig erwähnt, kann nunmehr Rotschlamm in Verbindung mit dem erfindungsgemäßen Verfahren wirtschaftlich genutzt werden, wobei dieses Produkt in leicht trennbare Metallchloride überführt wird, die entweder als solche oder nach Umwandlung in die Oxide in verschiedenen Wirtschaftszweigen und Verfahrensgängen vorteilhaft verwendet werden können.

Wenn auch einerseits die mit der Erfindung bevorzugt vorgeschlagene Verwendung von Rotschlamm als Metalloxid zu wirtschaftlich und reaktionskinetisch sehr vorteilhaften Ergebnissen führt, so soll andererseits die Verwendung anderer Metalloxide oder Metallhydroxide ebenfalls unter die Lehre der Erfindung fallen.

So können anstelle oder anteilig zum Rotschlamm Metalloxide und / oder Metallhydroxide enthaltende Stoffe wie Filterstäube, Flugaschen, Flugsande, alte Haldenberge, Galvanikschlämme und dergleichen Stoffe im Verfahren nach der Erfindung eingesetzt werden.

Dies erspart gegebenenfalls eine kostanträchtige Entsorgung dieser Stoffe und eröffnet hierfür eine wirtschaftlich und technisch sinnvolle und somit vorteilhafte Verwendung.

Eine weitere Ausgestaltung sieht vor, daß das aus der Reaktionsstufe abgezogene, außer Kohlenmonoxid und Wasserstoff noch die flüchtigen Metallchloride enthaltende heiße Gas in einer nachgeschalteten Kühlstufe gekühlt, woraufhin in einer nachgeschalteten Kondensationsstufe das Metallchlorid als Sublimat aus dem Gas ausgefällt und vorzugsweise in einer Trennstufe vom Gas getrennt und das Sublimat aus dem Prozeß ausgeschieden wird.

Und schließlich ist vorgesehen, daß das vom Metallchlorid getrennte Produktgas in einer nachgeschalteten Entstaubungsstufe nachgereinigt, sodann verdichtet und in einen Vorratsbehälter zur weiteren Verwendung vorzugsweise zum einen Teil zur Energiegewinnung und zum restlichen Teil zur Rückführung in die Reaktionsstufe verwendet wird.

Eine erfindungsgemäße Anlage zur Durchführung des in den Ansprüchen 1 bis 9 beanspruchten Verfahrens ist gekennzeichnet durch einen Aufgabebehälter für die zu verarbeitenden Abfallstoffe mit nachgeschaltetem Förderer, vorzugsweise einer Pumpe, einem nachgeschalteten Verdampfer, einem nachgeschalteten und induktiv beheizbaren Reaktor, einem nachgeschalteten als Kühler ausgebildeten Wärmeaustauscher mit zugeordneten Sublimator, einem nachgeschalteten Gasfilter, Gasometer, Verdichter und einer Syntheseanlage mit zugeordneten Trennsäulen und Lagertanks.

Ein weiterer erfindungsgemäßer Vorschlag zur Ausgestaltung der Anlage geht dahin, daß dem Reaktor eine Pumpe sowie eine Wasserverdampfer- und Dampfüberhitzereinheit zugeordnet sind.

Fernerhin ist die Trennsäule am Kopfende mit einer Zuleitung zu einem Gasometer verbunden, an den ein Gasmotor mit einem Generator angeschlossen ist.

Und schließlich ist in vorteilhafter Ausgestaltung an den Sublimator ein Regenerator und Oxidator mit Tank angeschlossen.

Die Erfindung wird in einer schematischen Darstellung eines Blockschaltbildes in einer bevorzugten Ausführungsform gezeigt, wobei aus dem Blockschaltbild weitere vorteilhafte Einzelheiten des erfindungsgemäßen Verfahrens und der erfindungsgemäßen Anlage entnehmbar sind.

Die Zeichnung zeigt im einzelnen in

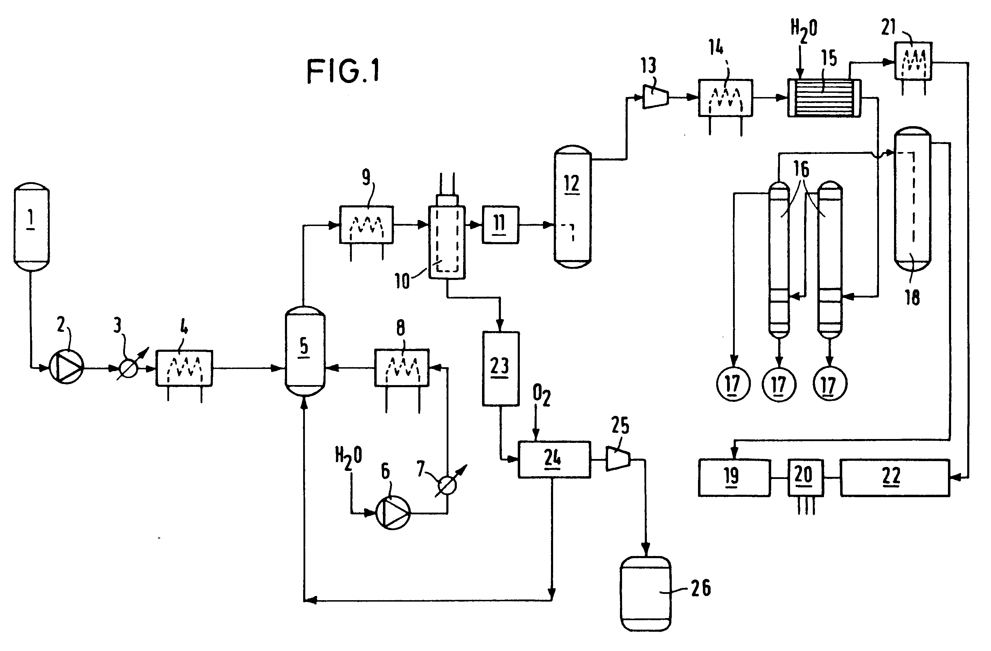

Figur 1    eine Anlage zur Durchführung des Verfahrensganges entsprechend den Ansprüchen 1 bis 12, in der rein schematischen Darstellung eines Blockschaltbildes.

Zur Durchführung des Verfahrens entsprechend den Ansprüchen 1 bis 9 zur Energiegewinnung aus giftigen Abfallstofen bei deren gleichzeitiger Entsorgung, wobei die Abfallstoffe zumindest erhebliche Anteile von substituierten Kohlenwasserstoffen aufweisen, wie sie beispielsweise als Chlorverbindungen bzw. Chlorkohlenwasserstoffe vorliegen, wird gemäß Blockschaltbild in der Figur 1 der in einem Behälter 1 aufbewahrte beispielsweise flüssige und giftige Abfallstoff mit Hilfe der Pumpe 2 über den Durchflußmesser 3 in den Verdampfer 4 gepumpt, in welchem er auf Siedetemperatur erhitzt wird. Der aus dem Verdampfer ausströmende Dampf gelangt in den mit Kohlenstoff und einem schwer verhüttbaren Metalloxid gefüllten, induktiv beheizten Reaktor 5, in dem bei einer Temperatur zwischen 800 und 1.100 °C die Zersetzung und die Bildung von Kohlenmonoxid sowie des flüchtigen Metallchlorids stattfindet.

Gleichzeitig wird mit Hilfe der Pumpe 6 über den Durchflußmesser 7 und den Wasserverdampfer und Dampfüberhitzer 8 soviel Wasserdampf in den Reaktor 5 eingeblasen, daß entsprechend einer vorherigen stöchiometrischen Rechnung ein bestimmtes, aus Kohlenmonoxid und Wasserstoff bestehendes Gasgemisch erzeugt wird.

Das Gasgemisch gelangt zusammen mit dem flüchtigen Metallchlorid über den Wärmeaustauscher 9 zu dem Sublimator 10, in dem sich das Metallchlorid in fester Form niederschlägt.

Über einen nachgeschalteten Filter 11 gelangt das Wassergas, CO and $H_2$, in den Gasometer 12 und wird von dort über den Verdichter 13 und den Erhitzer 14, der nur zu Beginn des Prozesses benutzt wird, in die Synthese-Anlage 15 eingeleitet, in der die Bildung nutzbarer Kohlenwasserstoffe erfolgt. Mit $H_2O$ ist das zugeführte Kühlwasser bezeichnet. Das die Synthese-Anlage verlassende gasförmige Produkt wird in den Trennsäulen 16 in die verschiedenen Fraktionen aufgespalten und in den Lagertanks 17 gesammelt.

Die am Kopf der Trennsäulen 16 austretenden permanent gasförmigen Kohlenwasserstoffe werden im Gasometer 18 bevorratet und strömen von dort zu einem Gasmotor 19, der mit einem Generator 20 gekoppelt ist.

Der aus der Fischer-Tropsch-Anlage 15 ausströmende heiße Dampf, der aus dem erforderlichen Kühlwasser entsteht, gelangt über den Dampfüberhitzer 21 zu einer Dampfkraftmaschine 22, die ebenfalls mit dem Generator 20 gekoppelt ist.

Das im Sublimator anfallende Metallchlorid wird im Regenerator 23 in Metalloxid und Chlorwasserstoff umgewandelt. Der Chlorwasserstoff wird im Oxidator 24 nach dem Deacon-Prozeß zu Chlor oxidiert und nach Verdichtung in dem Verdichter 25 in den Tanks 26 gelagert.

Das zurückgewonnene Metalloxid wird wieder dem Reaktor 5 zugeführt.

## Patentansprüche

1.   Verfahren zur Energiegewinnung aus giftigen Abfallstoffen bei deren gleichzeitiger Entsorgung, wobei die Abfallstoffe zumindest erhebliche Anteile von substituierten Kohlenwasserstoffen aufweisen, wie sie beispielsweise als Chlorverbindungen bzw. Chlorkohlenwasserstoffe der Formeln $CCl_4$, $CHCl_3$, $C_2H_2Cl_4$, PCB, PVC, Polyvinylidenchlorid etc. vorliegen, dadurch gekennzeichnet, daß der Abfallstoff in einem induktiv beheizbaren Reaktor in Anwesenheit eines schwer verhüttbaren Metalloxides und eines elektrisch leitfähigen Materials, beispielsweise Elektrodenkoks oder Elektrographit, sowie im Kontakt mit Wasserdampf bei Temperaturen zwischen 800 und 1.100 °C thermisch zersetzt wird, wobei eine dem Chlorgehalt der Abfallstoffe entsprechende Metalloxidmenge in flüchtiges Metallchlorid sowie ein Anteil freiwerdenden Kohlenstoffs in Kohlenmonoxid und ein mit dem Metalloxid nicht reagierender Anteil des Kohlenstoffs mit Hilfe einer stöchiometrischen Menge Wasserdampf zu Wassergas, CO + $H_2$, umgesetzt wird.

2. Verfahren nach Anspruch 1, dadurch gekennzeichnet, daß das im Reaktor entstandene Wassergas CO + H₂, durch anschließende Fischer-Tropsch-Synthese in Kohlenwasserstoffe umgewandelt wird und diese vorzugsweise zur Energieerzeugung verwendet werden.

3. Verfahren nach Anspruch 2, dadurch gekennzeichnet, daß die bei der Umsetzung entstehenden gasförmigen Kohlenwasserstoffe zur Deckung des Energiebedarfes in den verschiedenen Verfahrensstufen herangezogen werden.

4. Verfahren nach Anspruch 1, dadurch gekennzeichnet, daß als schwer verhüttbares Metalloxid $Al_2O_3$ oder $TiO_2$ verwendet wird.

5. Verfahren nach Anspruch 4, dadurch gekennzeichnet, daß zusätzlich und/oder anstelle von $Al_2O_3$ oder $TiO_2$ ein Gemenge von schwer und weniger schwer verhüttbaren Metalloxiden verwendet wird, bzw. daß zusätzlich und/oder anstelle eines oder mehrerer dieser schwer oder weniger schwer verhüttbaren Metalloxide Stoffe eingesetzt werden, in welchen Metalloxide oder Metallhydroxide enthalten sind, wie Filterstäube, Flugaschen, Flugsande, Haldenberge, Galvanikschlämme oder dergleichen Stoffgemische.

6. Verfahren nach Anspruch 1, dadurch gekennzeichnet, daß das im Reaktor erzeugte flüchtige Metallchlorid aus dem Gas durch Sublimation bzw. Kondensation und nachfolgende Trennung abgeschieden wird.

7. Verfahren nach Anspruch 6, dadurch gekennzeichnet, daß das abgeschiedene Metallchlorid durch Umsetzung mit Wasserdampf nach der Formel

$$2\ AlCl_3 + 3H_2O \rightarrow Al_2O_3 + 6\ HCl$$

wieder zu Metalloxid umgesetzt wird und dieses erneut in den Prozeß zurückgeführt wird.

8. Verfahren nach Anspruch 7, dadurch gekennzeichnet, daß das bei der Umsetzung von Metallchlorid in Metalloxid entstandene Chlorwasserstoffgas HCl durch Umsetzung mit Sauerstoff beispielsweise nach der Formel

$$4\ HCl + O_2 \rightarrow 2\ Cl_2 + 2\ H_2O$$

in elementares Chlor und Wasserdampf zerlegt wird.

9. Verfahren nach Anspruch 2, dadurch gekennzeichnet, daß bei der Kühlung der Fischer-Tropsch-Synthesestufe anfallender Wasserdampf ganz oder zumindest teilweise zur Energiegewinnung verwendet wird.

10. Anlage zur Durchführung des Verfahrens nach einem oder mehreren der Ansprüche 1 bis 9, gekennzeichnet durch einen Aufgabebehälter (1) für die zu verarbeitenden Abfallstoffe mit nachgeschaltetem Förderer, vorzugsweise einer Pumpe (2), einem nachgeschalteten Verdampfer (4), einem nachgeschalteten und vorzugsweise induktiv beheizbaren Reaktor (5), einem nachgeschalteten als Kühler ausgebildeten Wärmeaustauscher (9) mit zugeordnetem Sublimator (10), einem nachgeschalteten Gasfilter (11), Gasometer (12), Verdichter (13) und einer Syntheseanlage (15) mit zugeordneten Trennsäulen (16) und Lagertanks (17).

11. Anlage nach Anspruch 10, dadurch gekennzeichnet, daß dem Reaktor (5) eine Pumpe (6) sowie eine Wasserverdampfer- und Dampfüberhitzereinheit (8) zugeordnet sind.

12. Anlage nach Anspruch 10, dadurch gekennzeichnet, daß die Trennsäule (17) am Kopfende mit einer Zuleitung zu einem Gasometer (18) verbunden ist, an dem ein Gasmotor (22) mit einem Generator (20) angeschlossen ist.

13. Anlage nach Anspruch 10, dadurch gekennzeichnet, daß an dem Sublimator (10) ein Regenerator (13) und Oxidator (24) mit Tank (26) angeschlossen ist (Figur 1).

**Claims**

1. A process for the generation of energy from poisonous waste materials with the simultaneous disposal thereof, said waste materials containing at least significant amounts of substituted hydrocarbons such as those, for example, present as chlorine compounds or chlorohydrocarbons, respectively, having the formulae $CCl_4$, $CHCl_3$, $C_2H_2Cl_4$, PCB, PVC, polyvinylidene chloride *etc.*,
characterized in that the waste material is thermally decomposed at between 800 °C and 1100 °C in the presence of a metal oxide which is difficult to smelt and an electroconductive material, for example electrode coke or electrographite, while being in contact with steam in an inductively heatable reactor, where an amount of metal oxide corresponding to the chlorine content of the waste material is reacted to form a volatile metal chloride, a portion of carbon which is liberated is reacted to form carbon monoxide, and a portion of carbon which does not react with the metal oxide is reacted with a stoichiometric amount of steam to form water gas, $CO + H_2$.

2. The process according to claim 1, characterized in that the water gas, $CO + H_2$, which has been produced in the reactor is converted into hydrocarbons by means of a subsequent Fischer-Tropsch synthesis and said hydrocarbons preferably are used for the production of energy.

3. The process according to claim 2, characterized in that the gaseous hydrocarbons formed in the reaction are employed for satisfying the energy requirements in the various process steps.

4. The process according to claim 1, characterized in that $Al_2O_3$ or $TiO_2$ is used as the metal oxide which is difficult to smelt.

5. The process according to claim 4, characterized in that a blend of metal oxides which are difficult or less difficult to smelt is used in addition to or in the place of $Al_2O_3$ or $TiO_2$, and/or that materials containing metal oxides or metal hydroxides, such as filter dusts, fly ashes, shifting sands, waste heaps, galvanic sludges or the like material mixtures, are employed in the place of one or more of these metal oxides which are difficult or less difficult to smelt.

6. The process according to claim 1, characterized in that the volatile metal chloride produced in the reactor is removed from the gas by sublimation and/or condensation and subsequent separation.

7. The process according to claim 6, characterized in that the removed metal chloride is reconverted into the metal oxide by the reaction with steam according to the formula

$$2\, AlCl_3 + 3\, H_2O \rightarrow Al_2O_3 + 6\, HCl$$

and the resulting metal oxide is recycled into the process.

8. The process according to claim 7, characterized in that the hydrogen chloride gas HCl generated in the reaction of the metal chloride to form the metal oxide is decomposed by the reaction with oxygen, for example according to the formula

$$4\, HCl + O_2 \rightarrow 2\, Cl_2 + 2\, H_2O ,$$

to form elemental chloride and steam.

9. The process according to claim 2, characterized in that steam produced in the cooling operation of the Fischer-Tropsch-synthetic step altogether or at least in part is used for the production of energy.

10. A plant for carrying out the process according to one or more of claims 1 to 9, characterized by a feed container (1) for the waste material to be processed followed by a conveyor, preferably a pump (2), followed by an evaporator (4), followed by a, preferably inductively, heatable reactor (5), followed by a heat exchanger (9) designed as a condenser with a sublimator (10) allocated thereto, followed by a gas filter (11), gas tank (12), compressor (13), and a synthesis unit (15) with separating columns (16) and storage tanks (17) allocated thereto.

11. The plant according to claim 10, characterized in that a pump (6) and a water-evaporating and steam-superheating unit (8) are allocated to the reactor (5).

12. The plant according to claim 10, characterized in that the head of the separating column (16) is connected with a gas tank (18) which is linked up to a gas motor (22) with a generator (20).

13. The plant according to claim 10, characterized in that a regenerator (23) and oxidizer (24) with tank (26) are connected to the sublimator (10) (Figure 1).

**Revendications**

1. Procédé de production d'énergie à partir de déchets toxiques avec élimination simultanée de ceux-ci, les déchets contenant au moins des quantités importantes d'hydrocarbures substitués, comme ceux qu'on trouve, par exemple, sous la forme de composés chlorés, en particules d'hydrocarbures chlorés répondant aux formules $CCl_4$, $CHCl_3$, $C_2H_2Cl_4$, PCB, PVC, chlorure de polyvinylidène, etc..., caractérisé en ce que le déchet est décomposé thermiquement, à des températures comprises entre 800 et 1100°C, dans un réacteur pouvant être chauffé par induction, en présence d'un oxyde de métal difficile à élaborer et d'un matériau électroconducteur, par exemple du coke pour électrodes ou de l'électrographite, ainsi qu'au contact de vapeur d'eau, si bien qu'une quantité d'oxyde de métal correspondant à la teneur en chlore des déchets est transformée en chlorure métallique volatil, et une partie du carbone libéré étant transformée en monoxyde de carbone, et une quantité de carbone qui ne réagit pas avec l'oxyde de métal, étant transformée en gaz à l'eau, CO + $H_2$, à l'aide d'une quantité stoechiométrique de vapeur d'eau.

2. Procédé selon la revendication 1, caractérisé en ce que le gaz à l'eau, CO + $H_2$, formé dans le réacteur est transformé, ensuite, selon le procédé de synthèse de Fischer-Tropsch, en hydrocarbures, qu'on utilise, de préférence, pour la production d'énergie.

3. Procédé selon la revendication 2, caractérisé en ce que les hydrocarbures gazeux formés pendant la réaction sont utilisés pour couvrir les besoins en énergie dans les différentes étapes de procédé.

4. Procédé selon la revendication 1, caractérisé en ce qu'on utilise $Al_2O_3$ ou $TiO_2$, comme oxyde de métal difficile à élaborer.

5. Procédé selon la revendication 4, caractérisé en ce qu'on utilise, en plus et/ou à la place de $Al_2O_3$ ou $TiO_2$, un mélange d'oxydes de métaux difficiles à élaborer et d'oxydes de métaux moins difficiles à élaborer, et qu'en plus et/ou à la place d'un ou plusieurs de ces oxydes de métaux difficiles à élaborer et oxydes de métaux moins difficiles à élaborer, on utilise des matériaux qui contiennent des oxydes de métal ou des hydroxydes de métal, comme des poussières provenant de filtres, des cendres volantes, des déchets en stock, des boues de dépôt électrolytique ou des mélanges de substances analogues.

6. Procédé selon la revendication 1, caractérisé en ce que le chlorure de métal volatil produit dans le réacteur est séparé du gaz par sublimation et une condensation suivies d'une séparation.

7. Procédé selon la revendication 6, caractérisé en ce que le chlorure de métal séparé est transformé de nouveau en oxyde de métal grâce à une réaction avec de la vapeur d'eau, selon l'équation :

$$2\ AlCl_3\ +\ 3\ H_2O\ \rightarrow\ Al_2O_3\ +\ 6\ HCl,$$

et cet oxyde de métal est recyclé dans le procédé.

8. Procédé selon la revendication 7, caractérisé en ce que le gaz chlorhydrique HCl formé pendant la réaction de transformation du chlorure de métal en oxyde de métal est décomposé en chlore élémentaire et vapeur d'eau par réaction avec de l'oxygène, par exemple selon l'équation :

$$4\ HCl\ +\ O_2\ \rightarrow\ 2\ Cl_2\ +\ 2\ H2O.$$

9. Procédé selon la revendication 2, caractérisé en ce qu'on utilise la totalité ou une partie de la vapeur d'eau produite pendant le refroidissement lors de l'étape de synthèse de Fischer-Tropsch, pour la production d'énergie.

10. Installation pour la mise en oeuvre du procédé selon une ou plusieurs des revendications 1 à 9, caractérisée en ce qu'elle comporte un réservoir de chargement (1) pour les déchets à traiter, suivi d'un dispositif de transport, de préférence une pompe (2), suivi d'un vaporisateur (4), suivi d'un réacteur (5), de préférence pouvant être chauffé par induction, suivi d'un échangeur de chaleur (9) formant dispositif de refroidissement, auquel est associé un dispositif de sublimation (10), suivi d'un filtre pour gaz (11), d'un gazomètre (12), d'un compresseur (13) et d'un réacteur (15) pour la synthèse, auquel sont associées des colonnes de séparation (16) et des cuves de stockage (17).

11. Installation selon la revendication 10, caractérisée en ce qu'une pompe (6) ainsi qu'une unité (8) comportant un vaporisateur d'eau et un surchauffeur de vapeur sont associées au réacteur (15).

12. Installation selon la revendication 10, caractérisée en ce qu'une colonne de séparation (16) est reliée à un gazomètre (18) connecté à un moteur à gaz (22) avec un générateur (20).

13. Installation selon la revendication 10, caractérisée en ce qu'un régénérateur (23) et un oxydateur (24) avec une cuve (26) sont reliés au dispositif de sublimation (10).

FIG.1

EP 0 306 540 B1